Europäisches Patentamt

European Patent Office

Office européen des brevets

(11) Numéro de publication: **0 233 419**
**A1**

# (12) DEMANDE DE BREVET EUROPEEN

(21) Numéro de dépôt: **86402591.1**

(22) Date de dépôt: **21.11.86**

(51) Int. Cl.4: **G03B 11/00** , **G02B 7/00**

(30) Priorité: **26.11.85 FR 8517431**

(43) Date de publication de la demande:
**26.08.87 Bulletin 87/35**

(84) Etats contractants désignés:
**AT BE CH DE ES GB IT LI LU NL SE**

(71) Demandeur: **Alfille, Jules**
**13 rue des Mourinoux**
**F-92600 Asnières(FR)**
**AT BE CH DE ES GB IT LI LU NL SE**
Demandeur: **Alfille, Maurice**
**13 rue des Mourinoux**
**F-92600 Asnières(FR)**
**BE CH DE ES GB IT LI LU NL SE AT**

(72) Inventeur: **Alfille, Maurice**
**13 rue des Mourinoux**
**F-92600 Asnières(FR)**
Inventeur: **Alfille, Jules**
**13 rue des Mourinoux**
**F-92600 Asnières(FR)**
Inventeur: **Belloil, Pascal**
**20 bis rue Carnot**
**F-77450 Esbly(FR)**

(54) **Ensemble porte-éléments optiques pour appareils d'observation, de laboratoire ou de prise de vue.**

(57) Un premier élément (1) constitué d'un corps (10) ayant une percée axiale (12), comporte des premiers moyens de fixation (14) sur la paroi délimitant la percée axiale, une collerette (16) en saillie vers l'extérieur, de type mâle, et une partie (20) latérale en saillie comportant des seconds moyens de fixation (22). Un ensemble d'éléments (40,50,60,70) associables au premier, comporte une même collerette (42,54,63,75) que celle du premier élément (1) et des moyens de fixation du type femelle complémentaires de la collerette (44,53,64,77).

L'ensemble d'éléments porte-optiques trouve une application notamment, dans le domaine des accessoires photographiques.

fig.1

# Ensemble porte-éléments optiques pour appareils d'observation, de laboratoire ou de prise de vue.

La présente invention concerne un ensemble de porte-éléments optiques pour appareil d'observation, de laboratoire ou de prise de vue comme, par exemple, une lunette d'observation ou un appareil photographique, et plus particulièrement d'éléments que l'on peut disposer à l'entrée de ces appareils pour traiter les faisceaux lumineux qui pénètrent à l'intérieur de ces appareils.

Il existe de nombreux appareils de traitement de faisceaux lumineux pour capter des images, afin de les analyser ou les garder en mémoire comme, par exemple, des lunettes d'observation ou des appareils photographiques.

L'entrée de tous ces appareils comporte un manchon à l'intérieur duquel est disposé généralement un ensemble de lentilles de différents types, aussi bien divergentes que convergentes, pour pouvoir, à la fin, focaliser les faisceaux lumineux en provenance de l'objet, ce manchon avec l'ensemble de lentilles constituant un objectif.

Pour certaines applications, ou pour répondre à certains désirs des utilisateurs de ces appareils, on a réalisé des éléments qui peuvent s'adapter sur les objectifs pour, par exemple, filtrer les faisceaux ou certaines longueurs d'ondes de ceux-ci, en occulter une partie, en déformer leur trajectoire etc.

On constate actuellement qu'il existe toute une série de ces éléments, mais qui, en fait, ne permet pas une cohérence relative entre eux. Pour résoudre les problèmes qui peuvent se poser aux différents utilisateurs de ces appareils optiques, il est nécessaire qu'ils possèdent tout un assortiment de ces différents éléments en nombre très important, avec, du fait de leur non cohérence, des éléments qui peuvent faire double-emploi, ce qui contribue incontestablement à alourdir le coût de ces appareils.

Aussi, la présente invention a-t-elle pour but de réaliser un ensemble de porte-éléments optiques pour appareil de prise d'images optiques ou de restitution, qui puisse répondre à presque tous les besoins des utilisateurs par des possibilités nombreuses de combinaisons, tout en maintenant l'ensemble des porte-éléments optiques dans une structure très simple.

Plus précisément, la présente invention a pour objet un premier élément porte-optique pour appareil optique de traitement d'images compris dans un ensemble de porte-éléments optiques, caractérisé par le fait qu'il comprend :

-un corps massique de forme sensiblement cylindrique comportant une percée axiale,

-des premiers moyens de fixation réalisés sur au moins une portion de la paroi latérale définissant ladite percée axiale,

-une collerette de fixation du type mâle de forme cylindrique de révolution, ladite collerette étant d'une part en saillie vers l'extérieur, solidaire dudit corps dans un plan perpendiculaire à l'axe de ladite percée axiale et, d'autre part, sur une extrémité dudit corps,

-une deuxième partie en saillie par rapport audit corps entourant l'axe de ladite percée axiale et sur l'extrémité dudit corps opposée à celle comportant ladite collerette, et

-des seconds moyens de fixation réalisés sur ladite deuxième partie en saillie, lesdits seconds moyens de fixation étant aptes à coopérer avec des moyens de fixation réalisés sur les appareils optiques.

Selon une autre caractéristique de la présente invention, lesdits premiers et/ou seconds moyens de fixation peuvent être constitués par au moins l'un des éléments suivants : charnière, crochet, emboîtement mâle ou femelle, emboîtement à baïonnette, enserrage par pression, filetage micrométrique, emboîtement télescopique, moyens par pivotement, rotulage ou cardans.

Selon une autre caractéristique de la présente invention, ledit ensemble comporte au moins, en plus avec ledit premier élément, l'un des seconds éléments suivants : tube allonge, pare-soleil, bascule, porte-accessoire optique tel que gélatine, masque, diaphragme, obturateur, moyens de traitement de faisceaux lumineux tels que filtres, polariseurs, éléments à dioptrie variable, viseurs orientables, boîtiers optiques, soufflets, lampes d'éclairage, cache-filtres, reproducteurs d'images, cedit second élément comportant sur un corps central délimitant une percée axiale, respectivement à ses deux extrémités, d'une part une collerette de fixation du type mâle identique à celle dudit premier élément, et d'autre part un moyen de fixation du type femelle complémentaire de ladite collerette.

D'autres caractéristiques et avantages de la présente invention apparaîtront au cours de la description suivante donnée en regard des dessins annexés à titre illustratif, mais nullement limitatif, dans lesquels :

-la Figure 1 représente un mode de réalisation d'un élément porte-optique de l'ensemble selon l'invention, permettant le couplage avec l'appareil optique de traitement d'images, et

-les Figures 2 à 6 représentent diférentes réalisations d'éléments porte-optique de l'ensemble selon l'invention.

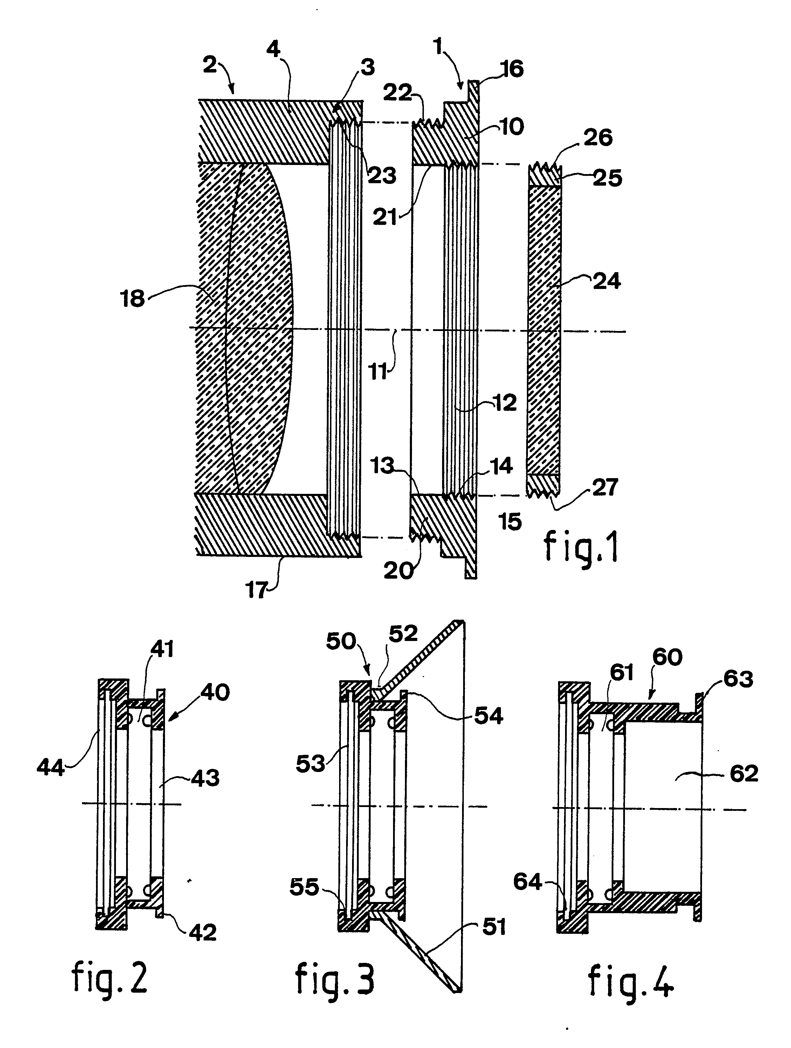

En revenant plus particulièrement à la Figure 1, celle-ci représente un élément porte-optique 1 apte à être accouplé à un appareil optique de traitement d'images 2 comme, par exemple, un appareil photographique, et plus particulièrement avec l'embout 3 de l'objectif 4 de cet appareil.

Plus précisément, l'élément port-optique 1 comporte un corps relativement massique 10 de forme sensiblement cylindrique de révolution et comportant suivant son axe 11 une percée axiale 12 cylindrique, avantageusement de révolution. Sur la paroi 13 délimitant cette percée 12, sont réalisés des moyens de fixation 14 comme, par exemple, un filetage. Bien sûr, d'autres moyens peuvent être prévus comme, par exemple, l'un des suivants : charnière, crochet, emboîtement mâle ou femelle, emboîtement à baïonnette, enserrage par pression, filetage micrométrique, emboîtement télescopique, moyens par pivotement, rotulage ou cardans.

Sur un côté 15 du corps 10, et en saillie vers l'extérieur, est réalisée une collerette 16 de forme cylindrique de révolution qui a un diamètre déterminé et choisi, fonctionnellement, pour dépasser de la surface latérale 17 des canons définissant les objectifs 4 des appareils optiques et enfermant, de façon connue, les lentilles 18. Cette collerette constitue, de ce fait, une partie mâle d'une fixation par emboîtement mâle-femelle. Pour cela, le plan passant par la collerette 16 qui a une épaisseur déterminée relativement faible, est avantageusement perpendiculaire à l'axe 11 et la collerette est située sur un côté latéral de ce corps 10.

L'élément comporte, en plus, une autre partie en saillie 20 située latéralement au corps 10 et sur le côté de celui-ci opposé à celui qui supporte la collerette 16. De ce fait, cette deuxième partie en saillie 20 entoure l'axe 11 de la percée 12 et la continue par une paroi interne 21. Cette partie 20 comporte des moyens de fixation 22 complémentaires de ceux, 23, prévus à l'extrémité du canon de l'objectif 4. Ces moyens de fixation 22 et 23 sont généralement constitués par des filetages, bien que l'on puisse en concevoir d'autres, en fonction éventuellement de ceux qui sont réalisés sur les objectifs de ces appareils d'optique.

De ce fait, l'élément porte-optique 1 peut être placé à l'extrémité de l'objectif 4 de l'appareil optique 2 en faisant coopérer les deux filetages 22 et 23. Comme cet élément 1 comporte des moyens de fixation intérieurs 14, il peut recevoir, par exemple, un élément filtrant 24 placé dans une bague 25 comportant sur sa surface périphérique latérale extérieure 26 un moyen de fixation 27 complémentaire de celui, 14, prévu dans la percée axiale 12. Avec la collerette 16 de fixation de type mâle, l'élément peut coopérer avec un autre élément porte-optique d'un ensemble donné qui comporte une partie de fixation femelle complémentaire du bord de la collerette mâle 16.

Des exemples non-limitatifs d'éléments d'un ensemble selon l'invention sont respectivement illustrés sur les Figures 2 à 6. Ces éléments ont alors chacun une collerette identique à celle, 16, prévue sur l'élément 1 de couplage avec l'appareil optique, chaque élément comportant bien entendu un moyen de fixation femelle complémentaire apte à coopérer par emboîtement mâle-femelle avec la collerette du premier élément de couplage avec l'objectif des appareils d'optique, ou d'autres éléments.

La Figure 2 représente un élément d'un ensemble constitué par un porte-filtre optique 40 apte à recevoir dans un logement 41 des moyens de traitement de faisceaux lumineux comme des filtres ou analogues. Le porte-filtre 40 comporte, sur une de ses faces 43, une collerette 42 identique dans son diamètre et son épaisseur à la collerette 16 du premier élément 1 et, sur l'autre face opposée 44, un moyen de fixation femelle complémentaire de celui des collerettes. Le moyen de fixation du filtre dans le logement 41 est connu en lui-même et ne sera pas plus amplement décrit ici.

La Figure 3 représente, elle, un autre élément 50 de porte-optique supportant un pare-soleil 51 qui entoure la paroi latérale centrale 52 du porte-filtre 53 qui peut être identique à celui illustré sur la Figure 2. Sur une face, il comporte donc une collerette 54 identique en son diamètre et son épaisseur à celle du premier élément 1 et des autres éléments de l'ensemble selon l'invention. Bien sûr, sur une autre face, il comporte un moyen de fixation femelle 55 complémentaire du bord des collerettes, identique dans tous les éléments de l'ensemble.

La Figure 4 représente un autre mode de réalisation d'un élément de l'ensemble, constitué essentiellement par un prolongateur 60 avec, éventuellement si nécessaire, une partie porte-filtre 61. Ce prolongateur peut constituer soit un pare-soleil soit un réceptacle solide 62 apte à recevoir un organe de traitement de faisceaux comme, par exemple, un décomposeur de trajet lumineux constitué de façon connue d'une pluralité de prismes juxtaposés les uns à côté des autres suivant un axe de révolution, ces prismes pouvant même être animés d'un mouvement de rotation, afin de pouvoir choisir le meilleur effet possible.

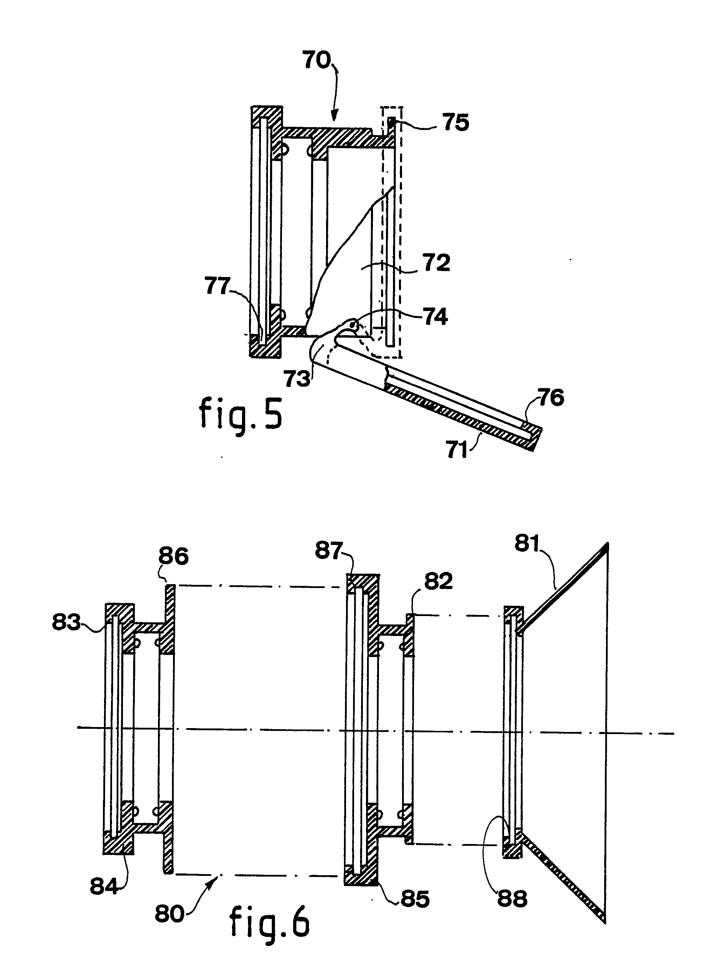

La Figure 5 représente un autre mode de réalisation d'un élément porte-optique 70 de l'ensemble selon l'invention, comportant la partie selon la Figure 4, avec en plus un filtre d'extrémité 71 qui est, en fait un moyen pour occulter ou laisser passer complètement les faisceaux lumineux. Ce filtre est essentiellement constitué, dans ce cas, par un bouchon monté pivotant sur un côté du manchon 72 et pouvant prendre au moins deux positions respectivement illustrées en plein, pour une position ouverte, et en pointillés, pour une position d'occultation totale. Ce filtre 71 est avantageusement réalisé en une seule pièce avec, sur un côté, une charnière 73 constituée essentiellement d'au moins un picot apte à coopérer avec au moins un orifice réalisé dans le corps du manchon 72, sur un axe 74.

Enfin, la Figure 6 représente un élément porte-optique 80 en association avec un élément accessoire, en l'occurence un pare-soleil 81. Dans ce mode de réalisation, le porte-élément optique 80 comporte la collerette 82 identique dans son diamètre et son épaisseur à toutes celles de tous les éléments porte-optique de l'ensemble selon l'invention, et un moyen complémentaire de fixation femelle 83 identique à ceux décrits précédemment. Cependant, dans ce mode de réalisation, l'élément porte-optique est constitué de deux parties 84 et 85 qui peuvent être assemblées par tous moyens, et notamment aussi par un emboîtement mâlefemelle 86-87, afin de réaliser un élément complet conforme à ceux de l'ensemble. Cette décomposition en deux parties permet, soit d'utiliser ce porte-optique seul, c'est-à-dire lorsque les deux parties 86 et 87 sont directement associées, soit avec d'autres éléments intercalés entre les deux parties 84 et 85 et coopérant respectivement avec les deux emboîtements complémentaires intercalaires 86 et 87. Ceci permet, éventuellement, d'utiliser des éléments optiques qui ont des dimensions hors-tout différentes de celles des éléments que l'on a l'habitude d'utiliser mais que l'on trouve, néanmoins, dans le commerce. Ceci est particulièrement vrai pour l'ensemble des filtres que l'on trouve dans le commerce, qui ont des dimensions plus ou moins standardisées et qu'il est très difficile d'obtenir dans d'autres dimensions, pour de simples raisons de réalisation en grande quantité.

A la description faite ci-dessus, on voit l'avantage d'une telle structure d'un ensemble d'éléments porte-optique tels que ceux définis et décrits ci-dessus, et illustrés sur les Figures jointes. En effet, une telle structure permet de réaliser des combinaisons les plus variées, avec un minimum d'encombrement. Les différents éléments porte-optique peuvent être facilement interchangés pour réaliser tous les effets désirés, et cela dans un minimum d'encombrement, puisque d'une part le premier élément de couplage peut contenir un premier élément optique de traitement du faisceau et que , d'autre part, on n'utilise qu'un seul porteélément pour réaliser l'effet désiré, ce qui n'était pas possible avec les porte-optique de l'Art antérieur.

Ceci permet, en plus, aux utilisateurs de n'avoir à se procurer que les éléments porte-optique d'un ensemble dont ils ont besoin, sans avoir, chaque fois, à se procurer des adaptateurs spéciaux, ce qui minimise fort leurs investissements.

## Revendications

1. Premier élément porte-optique pour appareil optique de traitement d'images compris dans un ensemble de porte-éléments optiques, CARACTERISE PAR LE FAIT QU'il comprend :
-un corps massique (10) de forme sensiblement cylindrique comportant une percée axiale (12),
-des premiers moyens de fixation (14) réalisés sur au moins une portion de la paroi latérale définissant ladite percée axiale,
-une collerette (16) de fixation de type mâle de forme cylindrique de révolution, ladite collerette étant d'une part en saillie vers l'extérieur, solidaire dudit corps dans un plan perpendiculaire à l'axe de ladite percée axiale et, d'autre part, sur une extrémité dudit corps,
-une deuxième partie (20) en saillie par rapport audit corps, entourant l'axe (11) de ladite percée axiale et sur l'extrémité dudit corps opposée à celle comportant ladite collerette, et
-des seconds moyens de fixation (22) réalisés sur ladite deuxième partie en saillie, lesdits seconds moyens de fixation étant aptes à coopérer avec des moyens de fixation (23) réalisés sur les appareils optiques.

2. Premier élément porte-optique selon la revendication 1, CARACTERISE PAR LE FAIT QUE lesdits premiers et/ou seconds moyens de fixation peuvent être constitués par au moins l'un des éléments sivants : charnière, crochet, emboîtement mâle ou femelle, emboîtement à baïonnette, enserrage par pression, filetage micrométrique, emboîtement télescopique, moyens par pivotement, rotulage ou cardans.

3. Ensemble d'éléments porte-optique en accord avec les revendications 1 et 2, CARACTERISE PAR LE FAIT QU'il comporte ledit premier élément porte-optique et au moins un second élément porteoptique pris dans l'ensemble dans éléments suivants : tube allonge, pare-soleil, bascule, porte-accessoire optique tel que gélatine, masque, diaphragme, obturateur, moyens de traitement de faisceaux lumineux tels que filtres, polariseurs, éléments à dioptrie variable, viseurs orientables, boîtiers optiques, soufflets, lampes d'éclairage, cache-filtres, reproducteurs d'images, cedit second élément comportant sur un corps central délimitant une percée axiale, respectivement à ses deux extrémités, d'une part une collerette de fixation (42, 54, 63, 75, 82) du type mâle identique à celle (16) dudit premier élément (1), et d'autre part un moyen de fixation (44, 53, 64, 77, 83) du type femelle complémentaire de ladite collerette.

4. Ensemble selon la revendication 3, CARACTERISE PAR LE FAIT QU'il reçoit un bouchon amovible (71) apte à coopérer avec ladite percée axiale, ledit bouchon comportant des moyens de fixation (76) du type femelle, complémentaire de ladite collerette de fixation mâle.

5. Ensemble selon la revendication 4, CARACTERISE PAR LE FAIT QUE ledit bouchon comporte une charnière latérale (73) montée pivotante dans des orifices complémentaires réalisés dans ledit corps central.

fig.1

fig.2

fig.3

fig.4

fig.5

fig.6

# Office européen des brevets

## RAPPORT DE RECHERCHE EUROPEENNE

Numéro de la demande

EP 86 40 2591

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 097 064 (J. ALFILLE) <br> * Page 2, ligne 34 - page 4, ligne 17; page 5, lignes 28-36; figures 1,2 * | 1-5 | G 03 B 11/00 <br> G 02 B 7/00 |
| Y | FR-A-1 203 564 (FILTROPTIC) <br> * Résumé; figures 1-3 * | 1-5 | |
| A | AT-B- 371 939 (F. GRUBER) <br> * Page 3, lignes 20-54; figures 1-4 * | 4,5 | |
| A | GB-A- 501 710 (P. FRANKE et al.) <br> * Page 1, lignes 33-85; figures 1-3 * | 1-5 | |
| A | GB-A-2 074 330 (HOYA CO.) <br> * Revendications 1-6; figures 3,6,13 * | 1-5 | DOMAINES TECHNIQUES RECHERCHES (Int. Cl.4) <br><br> G 03 B 11/00 <br> G 02 B 7/00 |

Le présent rapport de recherche a été établi pour toutes les revendications

| Lieu de la recherche | Date d'achèvement de la recherche | Examinateur |
|---|---|---|
| LA HAYE | 11-03-1987 | POPINEAU G.J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82